# EUROPEAN PATENT APPLICATION

(11) **EP 4 016 973 A1**
(43) Date of publication of application: **22.06.2022**
(21) Application number: 20943154.3
(22) Date of filing: 18.09.2020
(51) Int. Cl.: H04M 1/04

(54) **MOBILE PHONE HOLDING DEVICE**

(30) Priority: 29.06.2020 CN 202021227322 U
(71) Applicant: Winners' Sun Plastic & Electronic (Shenzhen) Co., Ltd., Shenzhen Guangdong 518000 (CN)
(72) Inventor: SHAN, Jinghua, Shenzhen, Guangdong 518000 (CN); PENG, Yi Bing, Shenzhen, Guangdong 518000 (CN)
(74) Representative: Mirlach, Xiaolu
(86) International application number: PCT/CN2020/116231
(87) International publication number: WO 2022/000808

(57) **Abstract**

A mobile phone clamping device includes at least one clamping component and a support bracket component. The at least one clamping component is configured to clamp a mobile phone. The support bracket component is configured to support the at least one clamping component. The at least one clamping component is connected with the support bracket component. The at least one clamping component is foldable and is received on one side of the support bracket component. When the mobile phone clamping device is not in use, the clamping components are foldable and are capable of receiving on two sides of the bracket support component. The mobile phone clamping device has a compact overall structure, small space occupation, and is convenient for storage and carrying.

## Description

### TECHNICAL FIELD

The present disclosure relates to a field of mobile phone accessories technology, and in particular to a mobile phone clamping device.

### BACKGROUND

With popularity of online media and mobile phones, online live broadcasts are becoming more and more common in our lives and are warmly welcomed and loved by consumers. Along with popularity of online live broadcast, various live broadcast platforms are starting up.

Anchors who conduct online live broadcasts generally use mobile phones to conduct live broadcasts. In order to increase attention and online viewing rates, they usually broadcast live on multiple platforms at the same time. During the live broadcast, an anchor needs to use a mobile phone clamping device to fix the mobile phone to free his hands and make the live broadcast convenient. However, conventional mobile phone clamping devices are inconvenient to fold and store, which is difficult to meet portable needs of users.

### SUMMARY

An object of the present disclosure is to provide a mobile phone clamping device that is convenient to store.

The present disclosure provides a mobile phone clamping device. The mobile phone clamping device comprises at least one clamping component and s support bracket component. The at least one clamping component is configured to clamp a mobile phone. The support bracket component is configured to support the at least one clamping component. The at least one clamping component is connected with the support bracket component. The at least one clamping component is foldable and is received on one side of the support bracket component.

Optionally, each clamping component comprises a connecting head connected with the support bracket component and a clamping piece configured to clamp the mobile phone. Each connecting head is rotatably connected with each clamping piece.

Optionally, a receiving groove is arranged on each connecting head. Each clamping component further comprises a pin arranged in each receiving groove. One end of each clamping piece is arranged in each receiving groove and is rotatably connected with each pin.

Optionally, the number of the at least one clamping component is two. Two clamping components are respectively arranged on two sides of the support bracket component.

Optionally, an inserting sheet is arranged in a bottom portion of each connecting head. A clamping groove is formed between the inserting sheet and the bottom portion of the connecting head. The support bracket component comprises a frame body and extension seats, the extension seats are arranged on two sides of the frame body. The extension seats are rotatably connected with the at least one clamping component. A socket is arranged on one side of each extension seat away from the frame body. Each socket is configured to connect with the at least one clamping component. When each extension seat is connected with each clamping component, each inserting sheet is inserted into each socket.

Optionally, reinforcing ribs are arranged in each clamping groove. The reinforcing ribs are respectively connected with the bottom portion of each connecting head and each inserting sheet.

Optionally, a threaded hole is on a bottom portion of the inserting sheet. A rotating button and a threaded post is arranged on a top portion of the frame body. The rotating button is arranged on an inner side of the top portion of the frame body. The rotating button is connected with the threaded post; the threaded post passes through the top portion of the frame body and is threadedly connected with the top portion of the frame body.

Optionally, the support bracket component comprises a frame body and extension seats. The extension seats are arranged on two sides of the frame body. The extension seats are rotatably connected with the at least one clamping component.

Optionally, the extension seats comprise connecting pieces and extension piece. The connecting pieces are arranged on the two sides of the frame body. Each extension piece is rotatably connected with each connecting piece

Optionally, a first sawtooth structure is arranged on an edge of each extension piece facing a corresponding connecting piece. A second sawtooth structure is arranged on an edge of each connecting piece facing a corresponding extension piece. When each extension piece is connected with the corresponding connecting piece. Each first sawtooth structure is engaged with each second sawtooth structure.

When the mobile phone clamping device of the present disclosure is not in use, the clamping components are foldable and are capable of receiving on two sides of the bracket support component. The mobile phone clamping device has a compact overall structure, small space occupation, and is convenient for storage and carrying.

### BRIEF DESCRIPTION OF DRAWINGS

The drawings are included to provide a further understanding of embodiments of the present disclosure, which form portions of the specification and are used to illustrate implementation manners of the present disclosure and are intended to illustrate operating principles of the present disclosure together with the description. Apparently, the drawings in the following description are merely some of the embodiments of the present disclosure, and those skilled in the art are able to obtain other drawings according to the drawings without contributing any inventive labor. In the drawing:
FIG. 1 is a schematic diagram of a mobile phone clamping device according to one embodiment of the present disclosure.
FIG. 2 is another schematic diagram of the mobile phone clamping device according to one embodiment of the present disclosure.
FIG. 3 is a schematic diagram of a support bracket component according to one embodiment of the present disclosure.
FIG. 4 is an exploded view of an extension seat according to one embodiment of the present disclosure.
FIG. 5 is a schematic diagram of a rotating portion according to one embodiment of the present disclosure.
FIG. 6 is another schematic diagram of the support bracket component according to one embodiment of the present disclosure.
FIG. 7 is an enlarged view of the portion A shown in FIG. 6.
FIG. 8 is a schematic diagram of the support bracket component according to one embodiment of the present disclosure where a socket is facing forward.
.FIG. 9 is a schematic diagram of the support bracket component according to one embodiment of the present disclosure where the socket is facing backward.
FIG. 10 is a schematic diagram of a clamping component according to one embodiment of the present disclosure.
FIG. 11 is a schematic diagram of the clamping component according to one embodiment of the present disclosure.

### DETAILED DESCRIPTION

It should be understood that specific structure and function details disclosed herein are only representative and are used for the purpose of describing exemplary embodiments of the present disclosure. However, the present disclosure may be achieved in many alternative forms and shall not be interpreted to be only limited to the embodiments described herein.

It should be understood in the description of the present disclosure that terms such as "first" and "second" are only used for the purpose of description, rather than being understood to indicate or imply relative importance or hint the number of indicated technical features. Thus, the feature limited by "first" and "second" can explicitly or impliedly include one or more features. In the description of the present disclosure, the meaning of "a plurality of" is two or more unless otherwise specified. The term "include" and any variant are intended to cover non-exclusive inclusion, , which may exist or add one or more other features, integers, steps, operations, units, components, and/or combinations thereof.

In addition, terms such as "central", "horizontal", "upper", "lower", "left", "right", "vertical", "horizontal", "top", "bottom", "inner", "outer", etc. indicate direction or position relationships shown based on the drawings, and are only intended to facilitate the description of the present disclosure and the simplification of the description rather than to indicate or imply that the indicated device or element must have a specific direction or constructed and operated in a specific direction, and therefore, shall not be understood as a limitation to the present disclosure.

In addition, unless otherwise regulated and defined, terms such as "installation," "bonded," and "bonding" shall be understood in broad sense, and for example, may refer to fixed bonding or detachable bonding or integral bonding; may refer to mechanical bonding or electrical bonding; and may refer to direct bonding or indirect bonding through an intermediate medium or inner communication of two elements. For those of ordinary skill in the art, the meanings of the above terms in the present disclosure may be understood according to concrete conditions.

The present disclosure will be further described in detail below in combination with the drawings and optional embodiments.

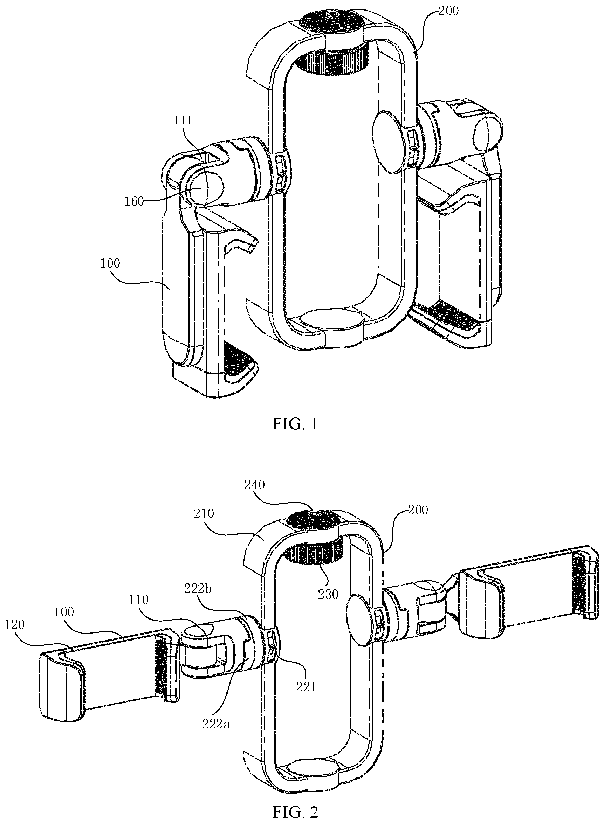

As shown in FIGS. 1 and 2, in one embodiment, the present disclosure provides a mobile phone clamping device. The mobile phone clamping device comprises at least one clamping component 100 and a support bracket component 200. The at least one clamping component 100 IS configured to clamp the mobile phone. The support bracket component 200 is configured to support the at least one clamping component 100. The at least one clamping component 100 is connected with the support bracket component 200. The at least one clamping component 100 is foldable and is received on one side of the support bracket component 200. When the mobile phone clamping device of the present disclosure is not in use, the at least one clamping component 100 is foldable and is capable of receiving on one side of the bracket support component 200. The mobile phone clamping device has a compact overall structure, small space occupation, and is convenient for storage and carrying.

Optionally, each clamping component 100 comprises a connecting head 110 connected with the support bracket component 200 and a clamping piece 120 configured to clamp the mobile phone. Each connecting head 110 is rotatably connected with each clamping piece 120. Specifically, a receiving groove 111 is arranged on each connecting head 110. Each clamping component 100 further comprises a pin 160 arranged in each receiving groove 111. One end of each clamping piece 120 is arranged in each receiving groove 111 and is rotatably connected with each pin 160.

Each clamping piece 120 is received on one side of the bracket support component 200 but rotating, which has a compact overall structure, small space occupation, and is convenient for storage and carrying.

Furthermore, the number of the at least one clamping component 100 is two. Two clamping component are respectively arranged on two sides of the support bracket component 200. The clamping components arranged on two sides of the support bracket 100 are able to clamp two mobile phone at the same time.

In another embodiment, as shown in FIGS. 1 and 2, differing from the above-mentioned embodiment, the clamping components 100 are rotatably connected or fixedly connected with the support bracket component 200. The clamping components 100 are rotatably connected or fixedly connected with the support bracket component 200, which is convenient for a user to choose a method of clamping the mobile phone that suits his needs.

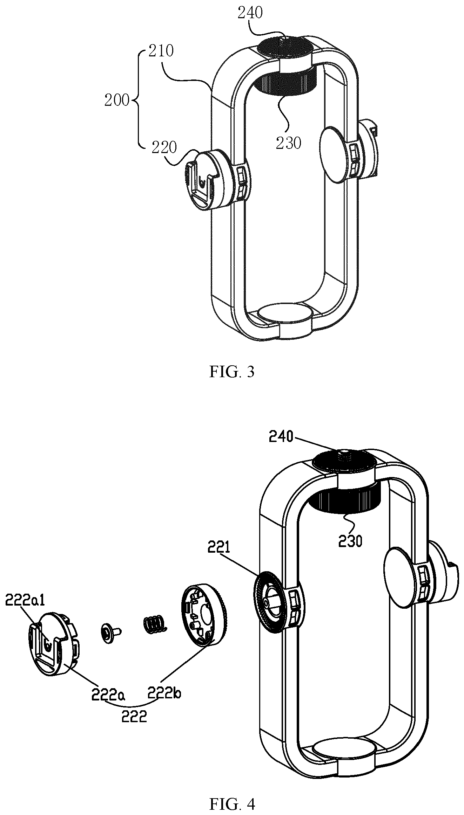

In an implementation manner in which the clamping components 100 are rotatably connected with the support bracket component 200, as shown in FIG. 3, the support bracket component 200 comprises a frame body 210 and extension seats 220. The extension seats 220 are arranged on two sides of the frame body 210. The extension seats 220 are rotatably connected with the clamping components 100. The clamping components 100 are rotatably connected with two sides of the frame body 210, and the clamping components 100 arranged on two sides are able to clamp the mobile phones for shooting or live broadcasting, which are convenient to use.

Optionally, the extension seats 220 comprise connecting pieces 221 and extension piece 222. The connecting pieces 221 are arranged on the two sides of the frame body 210. Each extension piece 222 is rotatably connected with each connecting piece 221

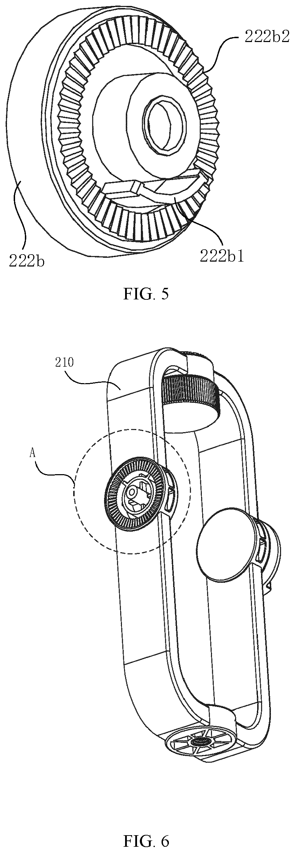

Specifically, as shown in FIGS. 4- 7, an arc-shaped stop block 222b1 is arranged on one side of each extension piece222 facing a corresponding connecting piece 221. A circular groove 221a is arranged on one side of each connecting piece 221 facing a corresponding extension piece 222. Two limiting blocks 221b are arranged on each circular groove 221a. Each two limiting blocks 221b separate the corresponding circular groove 221a into a minor arc slot 221a1 and a superior arc slot 221a2; the minor arc slot 221a1 is arranged on one side close to a top portion of the frame body 210. The superior arc slot 221a2 is arranged on one side close to a bottom portion of the frame body 210. When each extension piece 222 is connected with the corresponding connecting piece 221, each stop block 222b1 is inserted into each superior arc slot 221a2.

A socket 222a1 is arranged on one side of each extension seat away from the connecting piece 221. Each socket 222a1 is configured to connect with the at least one clamping component 100. A position of a bottom portion of each socket 222a1 is corresponding to a position of a bottom portion of a corresponding stop block 222b1. A position of an opening of each socket 222a1 is opposite to the position of the corresponding stop block 222b1. The minor arc slot refers to a slot whose central angle is less than 180°, and the superior arc slot refers to a slot whose central angle is greater than 180°.

In the embodiment, by arrangements of each circular groove 221a and each two limiting blocks 221b, cooperation between each circular groove 221a and each stop block 222b1, and a relative position between each stop block 222b1 and each socket 222a1, each clamping component 100 is connected with a corresponding expending piece 222, and each two limiting blocks 221b limit the position of the corresponding stop block 222b1, and the opening of each socket 222a1 do not face downwards, which ensures that an angle of each clamping component 100 is normal, and is convenient for the user to live broadcast or take pictures.

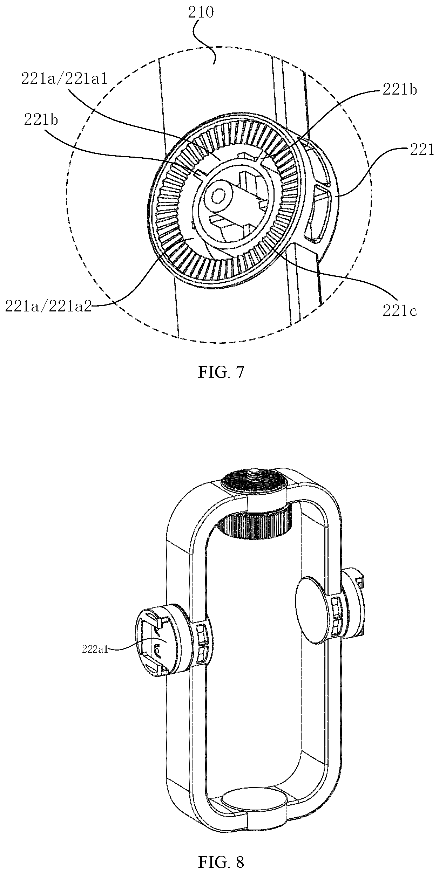

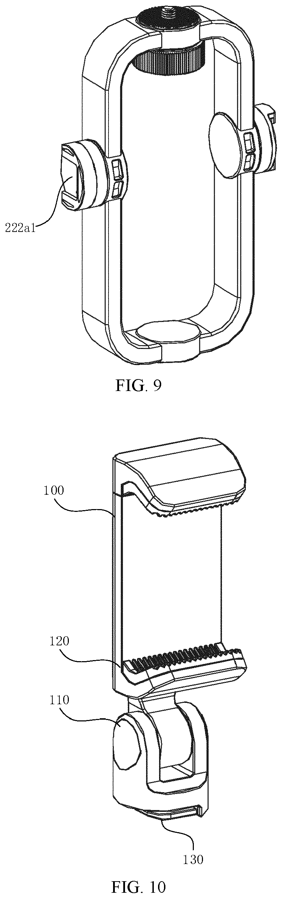

Furthermore, the central angle of each minor arc slot 221a1 is 90°, the central angle of each superior arc slot 221a2 is 270°. A central angle of each stop block 222b1 is 90°. As shown in FIGS. 8 and 9, this arrangement ensure that the expending piece 222 only rotates within a range of 0-180°, and an opening path of each socket 222a1 is forward, upward, and backward, but not downward, which ensures that the angle of each clamping component 100 clamping the mobile phone is normal, and is convenient for the user to live broadcast or take pictures.

As shown in FIGS. 4-7, a first sawtooth structure 222b2 is arranged on an edge of each extension piece 222 facing a corresponding connecting piece 221. A second sawtooth structure 221c is arranged on an edge of each connecting piece 221 facing a corresponding extension piece 222. When each extension piece 222 is connected with the corresponding connecting piece 221, each first sawtooth structure 222b2is engaged with each second sawtooth structure 221c. The first sawtooth structures 222b2 and the second saw-tooth structures 221c play a certain limiting role, prevent the extension piece 222 from rotating, and ensure that the angle of the clamping components 100 is not easily changed.

Furthermore, for above solution of the extension piece 222, to be specific, each extension piece 222 comprises an extension portion 222a and a rotating portion 222b connected with the extension portion 222a. Each rotating portion 222b is rotatably connected with a corresponding connecting piece 221. Each extension portion 222a is connected with a corresponding clamping piece 100.

Each socket 222a1 connected with the corresponding clamping component 100 is arranged on one side of each extension portion 222a away from the connecting piece 221. Each arc-shaped stop block 222b1 is arranged on one side of each rotating portion 222b facing the corresponding connecting piece 221. When the rotating portions 222b are connected with the connecting pieces221, the stop blocks 222b1 are inserted into the superior arc slots 221a2. Each first sawtooth structure 222b2 is arranged on an edge of each rotating portion 222b facing the corresponding connecting piece 221.

In the embodiment, the extension piece 222 are further refined, and each extension piece 222 is divided into the extension portion 222a and the rotating portion 222b. Each socket 222a1 is specifically arranged on the corresponding extension portion 222a. Each first sawtooth structure 222b2 and each stop block 222b1 are specifically arranged on the corresponding rotating portion 222b. Each extension piece 222 is divided into the extension portion 222a and the rotating portion 222b, which is convenient for separate processing during production.

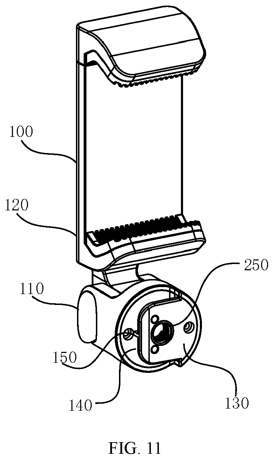

In another aspect of the embodiment, as a clamping component 100 that is correspondingly connected with the support bracket component 200, as shown in FIGS. 10 and 11, each clamping component 100 comprises the connecting head 110 connected with the support bracket component 200 and the clamping piece 120 configured to clamp the mobile phone. Each connecting head 110 is rotatably connected with the corresponding clamping piece 120. The user is able to directly adjust the angle of each clamping piece 120 according to actual needs.

In order to cooperate with the support bracket component 200, an inserting sheet 130 is arranged in a bottom portion of each connecting head 110. A clamping groove is formed between the inserting sheet and the bottom portion of the connecting head 110. Each socket 222a1 connected with the corresponding clamping component 100 is arranged on one side of each extension seat 220 away from the connecting piece 221. Specifically, each socket 222a1 connected with the corresponding clamping component 100 is arranged on one side of each extension portion 222a away from the connecting piece 221

When each extension seat 220 is connected with the corresponding clamping component 100, each inserting sheet 130 is inserted into the corresponding socket 222a1. In the embodiment, cooperation of the sockets 222a1 and the inserting sheets 130 realizes a detachable connection of the support bracket component 200 and the clamping components 100, which is convenient for disassembly and installation, and convenient for storage.

In order to strengthen structural strength of the inserting sheets 130, reinforcing ribs 150 are arranged in each clamping groove 140. The reinforcing ribs 150 are respectively connected with the bottom portion of each connecting head 110 and each inserting sheet 130.

A threaded hole 250 is on a bottom portion of each inserting sheet 130. A rotating button 230 and a threaded post 240 is arranged on a top portion of the frame body 210. The rotating button 230 is arranged on an inner side of the top portion of the frame body 210. The rotating button 230 is connected with the threaded post 240. The threaded post 240 passes through the top portion of the frame body 210 and is threadedly connected with the top portion of the frame body 210. Except for being rotatably connected with two sides of the frame body 210 through one extension seat 220, the clamping component is also capable of fixedly connecting to the top portion of the frame body 210 through the threaded post 240.

Furthermore, the threaded hole may also be provided on the bottom portion of the frame body 210. Because the threaded post 240 is arranged on the top portion of the frame body 210, multiple frame bodies 210 can be connected with each other through the threaded post 240 arranged on the top portion and the threaded hole on the bottom portion, so that multiple clamping components are able to be connected, and multiple mobile phones are able to be clamped, which is convenient for the user to conduct multi-platform live broadcasting.

The number of the clamping component 100 in the present disclosure may be one, two or even more. The extension seat 220 may also be provided with one, two or even more according to needs.

The above content is a further detailed description of the present disclosure in conjunction with specific optional embodiments, and is not considered that the specific embodiments of the present disclosure are limited to these descriptions. For those of ordinary skill in the field to which the present disclosure belongs, a number of simple deductions or substitutions can be made without departing from the concept of the present disclosure, which should all be regarded as falling within the protection scope of the present disclosure.

## Claims

1. A mobile phone clamping device, comprising:
at least one clamping component configured to clamp a mobile phone; and
a support bracket component configured to support the at least one clamping component;
wherein the at least one clamping component is connected with the support bracket component; the at least one clamping component is foldable and is received on one side of the support bracket component.

2. The mobile phone clamping device according to claim 1, wherein each clamping component comprises a connecting head connected with the support bracket component and a clamping piece configured to clamp the mobile phone; each connecting head is rotatably connected with a corresponding clamping piece.

3. The mobile phone clamping device according to claim 2, wherein a receiving groove is arranged on each connecting head; each clamping component further comprises a pin arranged in each receiving groove; one end of each clamping piece is arranged in each receiving groove and is rotatably connected with each pin.

4. The mobile phone clamping device according to any one of claims 1-3, wherein the number of the at least one clamping component is two; two clamping components are respectively arranged on two sides of the support bracket component.

5. The mobile phone clamping device according to claim 2 or 3, wherein an inserting sheet is arranged in a bottom portion of each connecting head; a clamping groove is formed between the inserting sheet and the bottom portion of the connecting head; the support bracket component comprises a frame body and extension seats, the extension seats are arranged on two sides of the frame body; the extension seats are connected with the at least one clamping component; a socket is arranged on one side of each extension seat away from the frame body; each socket is configured to connect with the at least one clamping component; when each extension seat is connected with a corresponding clamping component, each inserting sheet is inserted into a corresponding socket.

6. The mobile phone clamping device according to claim 5, wherein reinforcing ribs are arranged in each clamping groove, and the reinforcing ribs are respectively connected with the bottom portion of each connecting head and each inserting sheet.

7. The mobile phone clamping device according to claim 5, wherein a threaded hole is on a bottom portion of the inserting sheet; a rotating button and a threaded post is arranged on a top portion of the frame body; the rotating button is arranged on an inner side of the top portion of the frame body; the rotating button is connected with the threaded post; the threaded post passes through the top portion of the frame body and is threadedly connected with the top portion of the frame body.

8. The mobile phone clamping device according to claim 1, wherein the support bracket component comprises a frame body and extension seats, the extension seats are arranged on two sides of the frame body; the extension seats are rotatably connected with the at least one clamping component.

9. The mobile phone clamping device according to claim 1, wherein the extension seats comprise connecting pieces and extension piece; the connecting pieces are arranged on the two sides of the frame body; each extension piece is rotatably connected with a corresponding connecting piece.

10. The mobile phone clamping device according to claim 9, wherein a first sawtooth structure is arranged on an edge of each extension piece facing the corresponding connecting piece; a second sawtooth structure is arranged on an edge of each connecting piece facing a corresponding extension piece; when each extension piece is connected with the corresponding connecting piece, each first sawtooth structure is engaged with a corresponding second sawtooth structure.
